# EUROPÄISCHE PATENTSCHRIFT

(11) **EP 3 140 621 B1**
(45) Veröffentlichungstag und Bekanntmachung des Hinweises auf die Patenterteilung: **12.02.2020**
(21) Anmeldenummer: 15719685.8
(22) Anmeldetag: 28.04.2015
(51) Int. Cl.: G01D 18/00

(54) **SYSTEM ZUM KONFIGURIEREN UND ÜBERWACHEN EINES SENSORS**
SYSTEM FOR CONFIGURING AND MONITORING A SENSOR
SYSTÈME POUR CONFIGURER ET SURVEILLER UN CAPTEUR

(30) Priorität: 07.05.2014 DE 102014106409
(43) Veröffentlichungstag der Anmeldung: 15.03.2017
(73) Patentinhaber: Fraba B.V., 6416 SG Heerlen (NL)
(72) Erfinder: MÖNCH, Ingo, Singapore 207855 (SG); WARIAS, Christian, 40223 Düsseldorf (DE)
(74) Vertreter: Patentanwälte ter Smitten Eberlein-Van Hoof Rütten Partnerschaftsgesellschaft mbB
(86) Internationale Anmeldenummer: PCT/EP2015/059165
(87) Internationale Veröffentlichungsnummer: WO 2015/169640

(56) Entgegenhaltungen:
- EP-A1- 2 072 963
- DE-A1-102008 046 907
- DE-A1-102009 040 384
- US-A1- 2002 154 029
- US-A1- 2002 161 866
- US-A1- 2004 236 443
- US-A1- 2005 151 719
- US-B1- 7 262 523

## Beschreibung

Die Erfindung betrifft ein System zum Konfigurieren und Überwachen eines Positionssensors, der zum Ermitteln einer Positionslage, Winkellage, Drehzahl und/oder Geschwindigkeit einer Maschinenkomponente dient, zumindest umfassend den Positionssensor, eine Konfigurationseinheit zum Konfigurieren und Überwachen des Positionssensors, ein Bediengerät und eine Datenbank, wobei die Konfigurationseinheit über eine erste Datenverbindung mit dem Positionssensor verbunden ist, wobei die Konfigurationseinheit über eine zweite Datenverbindung zumindest mit dem Bediengerät verbunden ist. Ferner betrifft die Erfindung ein Verfahren zum Akkumulieren von Parameterdaten eines Positionssensors.

Bekannte Systeme umfassen zumindest einen Positionssensor, der Positionswerte zur Überwachung von Bewegungen von Maschinenkomponenten erfasst und in Form eines Ausgangssignals an eine Maschinen-Antriebssteuereinheit überträgt, wobei der Positionssensor zumindest in Bezug auf eine Messgenauigkeit programmierbar bzw. konfigurierbar ist. Ferner umfasst das System Elektronikbauteile, wie eine Konfigurationseinheit zum Konfigurieren und Überwachen des Positionssensors, insbesondere zum Konfigurieren und Überwachen der Sensibilität bzw. der Auflösung eines Messsignals des Positionssensors, wobei die Konfigurationseinheit zur Datenübertragung über eine erste Kommunikations-Schnittstelle verfügt und über eine erste Datenverbindung bzw. Datenleitung mit dem Positionssensor verbunden ist.

Derartige Systeme werden insbesondere bei einer Wartung, Überprüfung oder Konfiguration des Positionssensors angewendet. Dazu wird in regelmäßigen Zeitintervallen oder je nach Bedarf der Positionssensor einer Maschine über eine Datenverbindung bzw. Datenleitung mit einer Konfigurationseinheit verbunden, so dass die Konfigurationsdaten des Positionssensors mittels der Konfigurationseinheit vor Ort eingestellt werden können. Derartige Systeme sowie deren Arbeitsverfahren erfordern jedoch für Aufbau und Durchführung einen hohen Aufwand und sind daher zeit- und kostenintensiv.

Darüber hinaus ist ein gattungsgemäßes System aus der US 7,262,523 B1 bekannt. Hierbei ist zusätzlich im Bediengerät eine Datenbank vorgesehen, um bestimmte Daten eines zu bedienenden Motors zwischen zu speichern. Desweiteren ist es beispielsweise aus der US 2004/0236443 A1 und der US 2002/0161866 A1 bekannt, Systeme mit Webservern zu versehen, um eine Internet-gesteuerte Kommunikation zu ermöglichen. Auch diese Systeme benötigen zur Überwachung beziehungsweise Wartung einen hohen Zeitaufwand vor Ort.

Aufgabe der Erfindung ist es daher, ein gattungsgemäßes System zum Konfigurieren und Überwachen eines Positionssensors bereitzustellen, das den oben genannten Aufwand auf einfache und kostengünstige Weise minimiert. Hierbei soll es im Gegensatz zum Stand der Technik einer Vielzahl von Anwendern und Bediengeräten ohne Änderungs- oder Softwareinstallationsaufwand möglich sein, die oben genannte Problematik zu überwinden.

Die Lösung der Aufgabe erfolgt erfindungsgemäß durch ein System mit den Merkmalen des Anspruchs 1, durch ein Verfahren mit den Merkmalen des Anspruchs 9.

Erfindungsgemäß ist die Datenbank als Online-Datenbank ausgeführt, wobei die Konfigurationseinheit einen Webserver aufweist, wobei die Konfigurationseinheit zur Datenübertragung über die zweite Datenverbindung eine internetfähige und/oder mobilfunkfähige Kommunikationseinheit aufweist, wobei eine Datenbank vorgesehen ist und die Konfigurationseinheit und das Bediengerät dazu ausgebildet sind, verschiedene Parameterdaten des Positionssensors in der Datenbank zu speichern und abzurufen.. Dadurch kann das Konfigurieren bzw. die Eingabe der Konfigurationsdaten von der Konfigurationseinheit entkoppelt werden und an einem anderen Ort als dem Standort der Konfigurationseinheit erfolgen. Dadurch kann der Aufwand zum Aufbau und zur Durchführung einer Konfiguration deutlich gesenkt werden. Dies gilt insbesondere bei den vorliegenden Positionssensoren, die bevorzugt zur Regelung in Motorfeedbacksystemen integriert sind und/oder bei mobilen Maschinen, wie einem Kran oder einer Drehleiter, verwendet werden. Der Webserver kann eine standardmäßiger Server oder eine Server-Software sein. Der Webserver kann eine Datenbank aufweisen, auf der die Konfigurationsdaten eines Positionssensors speicherbar und abrufbar sind. Der Zugang zu der Datenbank kann passwortgeschützt und nur nach einer Anmeldung möglich sein. Somit kann die Datenbank nur einem bestimmten Personenkreis zugänglich sein, beispielsweise dem Hersteller oder Wartungspersonal des Positionssensors. Dadurch kann eine kontinuierliche Überwachung des Positionssensors erfolgen. Darüber hinaus können Konfigurationsdaten, die in die Datenbank eingeschrieben und gespeichert sind, über die zweite Datenverbindung an die Konfigurationseinheit und schließlich über die erste Datenverbindung zu dem Positionssensor übertragen werden. Dadurch ist eine relativ einfache, zeitnahe und kostengünstige Konfiguration des Positionssensors ermöglicht. Zudem kann mittels des Webservers eine Webseite generiert sein, die Informationen über den Positionssensor, wie einen ID-Code, Daten zur Fernwartung und/oder wählbare Einstellparameter aufweisen kann.

Die Konfigurationseinheit und die Kommunikationseinheit können entkoppelt und an jeweils unterschiedlichen Orten angeordnet sein. Insbesondere kann die Kommunikationseinheit an einem zum Aufbau einer Internet- oder Mobilfunkverbindung geeigneten Ort angeordnet sein, beispielsweise außerhalb einer Maschinenhalle. Ferner können die Einheiten unabhängig voneinander betrieben werden, was insbesondere im Falle einer Wartung einer der Einheiten von Vorteil ist.

Die Datenbank ist eine Online-Datenbank, in die Konfigurationseinheit und/oder das Bediengerät online einschreiben und/oder auslesen können. In einer anderen Ausgestaltung kann die Datenbank auch passiv gefüllt werden, in dem die Datenbank eine Nachricht, wie z.B. eine Email, von der Bedieneinheit und/oder der Konfigurationseinheit erhält, diese auswertet und speichert.

Die erste Datenverbindung und/oder die zweite Datenverbindung können jeweils eine drahtlose Verbindung darstellen, insbesondere eine Netzwerk-, Internet-, Mobilfunk- oder sonstige Funkverbindung, wie beispielsweise eine Bluetooth- oder WLAN-Verbindung. Dadurch können die Konfigurationseinheit und/oder der Positionssensor in ein Netzwerk integriert sein. Vorzugsweise ist die erste Datenverbindung eine kabelgebundene Datenübertragungsverbindung. Die zweite Datenverbindung ist vorzugsweise eine drahtlose Netzwerkverbindung, beispielsweise eine WLAN-Verbindung. Dazu kann die Konfigurationseinheit eine Drahtlos-Schnittstelle aufweisen, insbesondere einen sogenannten ,wireless access point. Dadurch kann eine standardmäßig Datenverbindung zur Datenübertragung zwischen der Konfigurationseinheit und einem Netzwerk bzw. dem Bediengerät verwendet werden. Die zweite Datenverbindung kann zudem eine Internetverbindung darstellen. Dadurch kann die Konfigurationseinheit in der Nähe des Positionssensors bzw. der zu überwachenden Maschinenkomponente und das Bediengerät an einem anderen Ort, beispielsweise in einem Büro oder einem Fahrzeug angeordnet sein.

Die Konfigurationseinheit kann zum Anschluss der ersten Datenverbindung an die Konfigurationseinheit eine serielle Schnittstelle aufweisen, wie beispielsweise eine SDCI-, I/O-Link-, EIA-422 oder RS-422 -Schnittstelle. Dadurch kann eine standardmäßig Datenverbindung zur Datenübertragung zwischen dem Positionssensor und der Konfigurationseinheit verwendet werden. Um mehrere Positionssensoren mit einer Konfigurationseinheit zu koppeln, kann die erste Datenverbindung zusätzlich oder alternativ zumindest eine Busschnittstelle aufweisen, beispielsweise eine CAN-Verbindung. Dadurch können mehrere Positionssensoren, Konfigurationseinheiten und/oder Bediengeräte über eine einzige Verbindungsleitung angesteuert werden. Darüber hinaus können sowohl die Positionssensoren als auch die Konfigurationseinheiten zugewiesene eindeutige Identifikationscodes aufweisen, um die vorgenommene Dokumentation eindeutig zu gestalten und/oder zu speichern.

Um das System relativ platzsparend aufzubauen, kann die Konfigurationseinheit in dem Positionssensor integriert sein.

Vorzugsweise ist die Konfigurationseinheit derart ausgebildet, dass über die Konfigurationseinheit verschiedene Parameter des Positionssensors an dem Positionssensor einstellbar und/oder auslesbar sind, insbesondere Status- und Wartungsinformationen, Einstellparameter, wie Mess-Auflösungen, Identifikationsdaten und/oder sonstige Schnittstellenparameter des Positionssensors. Zur Ansteuerung der Konfigurationseinheit dient das Bediengerät. Diese Parameter sind bevorzugt online eingebbar und/oder abrufbar.

Die Konfigurationseinheit und/oder das Bediengerät umfassen bevorzugt einen Speicher, in dem Daten des Positionssensors eingeschrieben und ausgelesen werden können.

Das Bediengerät ist bevorzugt ein mobiles Gerät, wie ein Computer, Laptop, Tablet-PC oder Smartphone, Dadurch kann das Bediengerät flexibel gehandhabt werden und im Falle einer Wartung oder zur Konfiguration eines Positionssensors in der Nähe des Positionssensors befindlich sein.

Der Positionssensor kann ein Drehgeber, Neigungssensor oder Linearsensor sein. Insbesondere kann der Positionssensor ein absoluter oder inkrementaler Drehgeber sein. Solche Drehgeber können für verschiedene Positionieraufgaben einer Maschinenkomponente verwendet werden und kennzeichnen einen bestimmten Punkt einer Bewegung durch ein eindeutiges Signal. Durch die Fähigkeit, einer Weg- und/oder Winkelposition einen exakten Positionswert zuordnen zu können, sind absolute und inkrementale Drehgeber eine der wichtigsten Bindeglieder zwischen Mechanik und Steuerung.

Für eine manuelle Eingabe der Konfigurationsdaten an der Konfigurationseinheit und/oder zur Überwachung der Konfigurationseinheit, kann die Konfigurationseinheit ein Display oder Touchpad zur Anzeige und Steuerung der Konfigurationsdaten aufweisen oder mit einem solchen verbunden sein.

Erfindungsgemäß ist in einem Verfahren zum Konfigurieren und Überwachen eines Positionssensor, der zum Ermitteln einer Positionslage, Winkellage und/oder Geschwindigkeit einer Maschinenkomponente dient, vorgesehen, dass die folgenden Schritte aufweist:
- Herstellen einer ersten Datenverbindung zwischen dem Positionssensor und einer Konfigurationseinheit, beispielsweise durch Anordnen eines seriellen Datenübertragungskabel,
- Herstellen einer zweiten Datenverbindung zwischen der Konfigurationseinheit und einem Bediengerät mittels eines in der Konfigurationseinheit integrierten Webservers, beispielsweise eine Netzwerk-Verbindung, die zumindest teilweise drahtlos ist,
- Auslesen oder Erstellen von Parameterdaten an dem Bediengerät,
- Übertragen der ausgelesenen oder erstellten Parameterdaten von der Bedieneinheit über ein Netzwerk an eine Online-Datenbank,
- Senden der Parameterdaten von dem Bediengerät an die Konfigurationseinheit über die zweite Datenverbindung,
- Senden der Parameterdaten von der Konfigurationseinheit an den Positionsensor über die erste Datenverbindung.

Der Webserver kann sowohl mit der Konfigurationseinheit als auch mit dem Bediengerät über die zweite Datenverbindung in Verbindung stehen kann. An dem Bediengerät werden die zur Konfiguration des Positionssensors erforderlichen Parameterdaten erstellt bzw. eingegeben. Die Daten können in dem Webserver und/oder der Konfigurationseinheit gespeichert werden. Die Konfigurationseinheit überträgt schließlich die empfangenen Parameterdaten über die erste Datenverbindung an den jeweiligen Positionsensor. Alternativ kann das Übertragen der Parameterdaten auch in die andere Richtung, nämlich von dem Positionssensor zu dem Bediengerät und/oder direkt zu einer Datenbank erfolgen. Dabei kann ein Übertragen der Parameterdaten optional auch über die erste Datenverbindung zu der Konfigurationseinheit bzw. dem Webserver und sodann zu dem Bediengerät oder direkt zu der Datenbank erfolgen. Folglich kann der Parameterübertragungsweg in beide Richtungen erfolgen, wobei die Anbindung an die Datenbank auch direkt von dem Positionssensor erfolgen kann. Die Datenbank empfängt die Daten bzw. Nachrichten, wertet diese aus und speichert relevante Informationen zur späteren Weiterverwendung. In einer besonders vorteilhaften Ausprägung ist diese Datenbank mit der Produktdatenbank bzw. Geschäftsdatenbank des Herstellers des Positionssensors verknüpft und/oder beinhaltet diese.

In einer Ausgestaltung der Erfindung erfolgt vor dem Senden der Parameterdaten von dem Bediengerät an die Konfigurationseinheit ein Zugriff des Bediengeräts auf den Webserver der Konfigurationseinheit.

In einer weiteren Ausgestaltung der Erfindung erfolgt vor dem Senden der Parameterdaten von dem Bediengerät an die Konfigurationseinheit ein Speichern der zu sendenden Daten in dem Bediengerät, wobei diese Daten erst zu einem späteren Zeitpunkt automatisiert gesendet werden. Das Senden kann insbesondere in Form einer Email erfolgen.

Nachfolgend wird die Erfindung anhand einer bevorzugten Ausführungsform unter Bezugnahme auf die anliegende Zeichnung näher erläutert.

Die einzige Figur zeigt eine Anordnung des Systems zum Konfigurieren und Überwachen eines Positionssensors 2. Der Positionssensor 2 ist vorliegend zum Messen bzw. Erfassen einer Position einer nicht dargestellten Maschinenkomponente an einer nicht dargestellten Maschine angeordnet. Der Positionssensor 2 kann ein Drehgeber oder Neigungssensors sein, dessen Einstellparameter 21 konfigurierbar bzw. einstellbar sind. Die Einstellparameter 21 betreffen beispielsweise eine Mess-Genauigkeit bzw. Mess-Auflösung, die beispielsweise ,Schritte pro Bewegungseinheit' sind. Somit kann der Positionssensor 2 beispielsweise dahingehend konfiguriert sein, dass eine Messung mit einer Auflösung von 1024 Schritten pro Umdrehung erfolgt. Die Einstellung der Parameter 21 erfolgt über eine Konfigurationseinheit 1, die zur Datenübertragung über eine erste Datenverbindung 12 mit dem Positionssensor 2 verbunden ist. Die erste Datenverbindung 12 ist vorliegend ein serielles Datenübertragungskabel, das über eine Schnittstelle 11 mit der Konfigurationseinheit 1 verbunden ist. Die Konfigurationseinheit 1 ist dadurch geeignet, die Einstellparameter 21 oder andere Daten des Positionssensors 2 auszulesen und/oder zu ändern.

Die Konfigurationseinheit 1 weist vorliegend einen Webserver 10 auf, der über eine zweite Datenverbindung 14 mit einem Netzwerk verbunden ist. Das Netzwerk ist vorliegend ein örtlich begrenztes WLAN-Netzwerk. Dadurch kann eine Verbindung lediglich zu Geräten aufgebaut werden, die sich in einem bestimmten örtlichen Bereich befinden, beispielsweise in einer Maschinenhalle. Zum Aufbau einer drahtlosen zweiten Datenverbindung 14 weist die Konfigurationseinheit 1 eine Drahtlos-Netzwerk-Schnittstelle 13 auf, beispielsweise eine WLAN-Antenne.

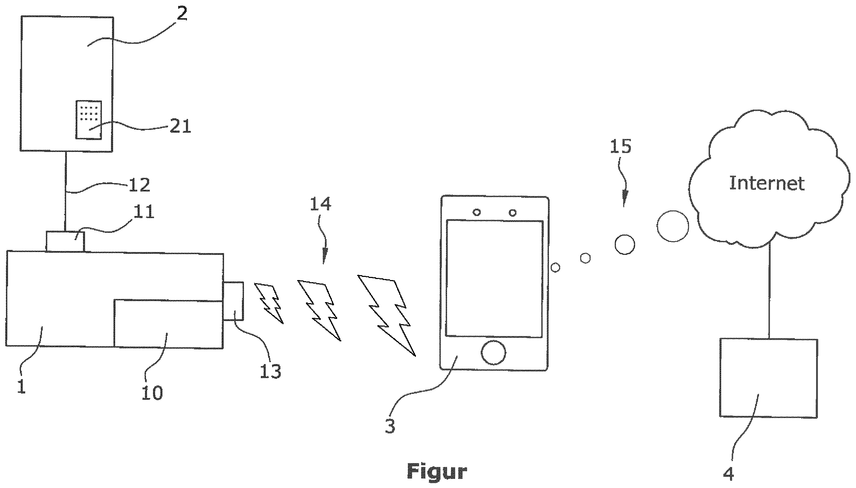

In dem Netzwerk der zweiten Datenverbindung 14 ist ein Bediengerät 3 angemeldet bzw. integriert, vorliegend ein Smartphone. Über die zweite Datenverbindung 14 kann somit ein Datenaustausch zwischen dem Bediengerät 3 und der Konfigurationseinheit 1 bzw. dem Webserver 10 erfolgen. Hierbei kann mittels des Bediengeräts 3 ein Zugriff auf den Webserver 10 erfolgen, insbesondere auf eine mittels des Webservers 10 generierte Webseite. Die in Figur 1 nicht dargestellte Webseite kann Informationen über den Positionssensor und/oder sogenannte Ein-/Ausgabefelder aufweisen, in denen ein Bediener des Bediengeräts 3 Daten, insbesondere Parameterdaten 21 des Positionssensors 2, auslesen und/oder eingeben kann.

Das Bediengerät 3 kann eine Internetanbindung 15 aufweisen, durch die das Bediengerät 3 Zugriff auf das Internet hat. Dadurch kann das Bediengerät 3 sowohl über die zweite Datenverbindung 14 auf den Webserver 10 bzw. die Konfigurationseinheit 1 als auch über die Internetverbindung 15 auf das Internet zugreifen.

Das System umfasst eine Online-Datenbank 4, die ebenfalls mit dem Internet verbunden ist, so dass von dem Bediengerät 3 über das Internet ein Zugriff auf die Online-Datenbank 4 erfolgen kann. In der Online-Datenbank 4 können die Parameterdaten 21 des Positionssensors 2 gespeichert und abrufbar sein. Dadurch kann das Bediengerät 3 sowohl auf den Webserver 10 bzw. die Konfigurationseinheit 1 als auch auf die Online-Datenbank 4 zugreifen und die Parameterdaten 21 des Positionssensors 2 mit den in der Datenbank 4 gespeicherten Daten abgleichen.

Das vorliegende System ermöglicht somit eine relativ unkomplizierte und aufwandsarme Konfiguration eines Positionssensors.

### Bezugszeichen:

- 1: Konfigurationseinheit
- 2: Positionssensor
- 3: Bediengerät
- 4: Datenbank
- 10: Webserver
- 11: Schnittstelle Konfigurationseinheit - Positionssensor
- 12: erste Datenverbindung
- 13: Schnittstelle Konfigurationseinheit - Bediengerät
- 14: zweite Datenverbindung
- 15: Internetverbindung
- 21: Parameterdaten

## Patentansprüche

1. System zum Konfigurieren und Überwachen eines Positionssensors (2), der zum Ermitteln einer Positionslage, Winkellage, Drehzahl und/oder Geschwindigkeit einer Maschinenkomponente dient, zumindest umfassend den Positionssensor (2), eine Konfigurationseinheit (1) zum Konfigurieren und Überwachen des Positionssensors (2), ein Bediengerät (3) und eine Datenbank (4), wobei die Konfigurationseinheit (1) über eine erste Datenverbindung (12) mit dem Positionssensor (2) verbunden ist, wobei die Konfigurationseinheit (1) über eine zweite Datenverbindung (14) zumindest mit dem Bediengerät (3) verbunden ist, **dadurch gekennzeichnet, dass** die Datenbank (4) als Online-Datenbank ausgeführt ist, wobei die Konfigurationseinheit (1) einen Webserver (10) aufweist, wobei die Konfigurationseinheit (1) zur Datenübertragung über die zweite Datenverbindung (14) eine internetfähige und/oder mobilfunkfähige Kommunikationseinheit aufweist, und die Konfigurationseinheit (1) und das Bediengerät (3) dazu ausgebildet sind, verschiedene Parameterdaten (21) des Positionssensors (2) in der Online-Datenbank (4) zu speichern und abzurufen.

2. System nach Anspruch 1, **dadurch gekennzeichnet, dass** die erste Datenverbindung (12) und/oder die zweite Datenverbindung (14) eine drahtlose Verbindung ist, insbesondere eine Netzwerk-, Internet-, Mobilfunk- oder sonstige Funkverbindung.

3. System nach einem der Ansprüche 1 oder 2, **dadurch gekennzeichnet, dass** die Konfigurationseinheit (1) zur Datenübertragung über die erste Datenverbindung (12) eine serielle Schnittstelle (11) und/oder eine Busschnittstelle aufweist.

4. System nach einem der vorhergehenden Ansprüche, **dadurch gekennzeichnet, dass** die Konfigurationseinheit (1) in dem Positionssensor (2) integriert ist.

5. System nach einem der vorhergehenden Ansprüche, **dadurch gekennzeichnet, dass** die Konfigurationseinheit (1) geeignet ist, verschiedene Parameterdaten (21) des Positionssensors (2), insbesondere eine Mess-Auflösung, Identifikationsdaten und/oder sonstige Schnittstellenparameter, an dem Positionssensor (2) einzustellen und/oder auszulesen.

6. System nach einem der vorhergehenden Ansprüche, **dadurch gekennzeichnet, dass** die Konfigurationseinheit (1) und/oder das Bediengerät (3) einen Speicher umfassen, in dem Parameterdaten (21) des Positionssensors (2) eingeschrieben und ausgelesen werden können.

7. System nach einem der vorhergehenden Ansprüche, **dadurch gekennzeichnet, dass** das Bediengerät (3) ein PC, Laptop, Smartphone oder Tablet-PC ist.

8. System nach einem der vorhergehenden Ansprüche, **dadurch gekennzeichnet, dass** der Positionssensor (2) ein Drehgeber, ein Neigungssensor oder ein Linearsensor ist.

9. Verfahren zum Konfigurieren und Überwachen eines Positionssensors (2), der zum Ermitteln einer Positionslage, Winkellage und/oder Geschwindigkeit einer Maschinenkomponente dient, mit den folgenden Schritten:
- Herstellen einer ersten Datenverbindung (12) zwischen dem Positionssensor (2) und einer Konfigurationseinheit (1),
- Herstellen einer zweiten Datenverbindung (14) zwischen der Konfigurationseinheit (1) und einem Bediengerät (3) mittels eines in der Konfigurationseinheit (1) integrierten Webservers (10),
- Auslesen oder Erstellen von Parameterdaten (21) an dem Bediengerät (3),
- Übertragen der ausgelesenen oder erstellten Parameterdaten (21) von der Bedieneinheit (3) über ein Netzwerk an eine Online-Datenbank (4),
- Senden der Parameterdaten (21) von dem Bediengerät (3) an die Konfigurationseinheit (1) über die zweite Datenverbindung (14),
- Senden der Parameterdaten (21) von der Konfigurationseinheit (1) an den Positionsensor (2) über die erste Datenverbindung (12).

10. Verfahren nach Anspruch 9, **dadurch gekennzeichnet, dass** vor dem Senden der Parameterdaten (21) von dem Bediengerät (3) an die Konfigurationseinheit (1) ein Zugriff des Bediengeräts (3) auf den Webserver (10) der Konfigurationseinheit (1) erfolgt.

11. Verfahren nach einem der Ansprüche 9 oder 10, **dadurch gekennzeichnet, dass** vor dem Senden der Parameterdaten (21) von dem Bediengerät (3) an die Konfigurationseinheit (1) ein Speichern der zu sendenden Parameterdaten (21) in dem Bediengerät (3) erfolgt und die Parameterdaten (21) erst zu einem späteren Zeitpunkt automatisiert gesendet werden.

## Claims

1. System for configuring and monitoring a position sensor (2) used to determine a position, angular position, rotational speed and/or velocity of a machine component, comprising at least the position sensor (2), a configuration unit (1) for configuring and monitoring the position sensor (2), a control unit (3) and a data base (4), wherein the configuration unit (1) is connected to the position sensor (2) via a first data link (12), wherein the configuration unit (1) is connected to at least the control unit (3) via a second data link (14), **characterized in that** the database (4) is configured as an online data base, wherein the configuration unit (1) comprises a web server (10), wherein, for data transmission via the second data link (14), the configuration unit (1) comprises a web-enabled and/or mobile radio-enabled communication unit, and the configuration unit (1) and the control device (3) are configured to store and retrieve various parameter data (21) of the position sensor (2) in the online database (4).

2. System of claim 1, **characterized in that** the first data link (12) and/or the second data link (14) is a wireless connection, in particular a network, Internet, mobile or other radio connection.

3. System of one of claims 1 or 2, **characterized in that** the configuration unit (1) comprises a serial interface (11) and/or a bus interface for data transmission via the first data link (12).

4. System of one of the preceding claims, **characterized in that** the configuration unit (1) is integrated in the position sensor (2).

5. System of one of the preceding claims, **characterized in that** the configuration unit (1) is adapted to set and/or read out at/from the position sensor (2) various parameter data (21) of the position sensor (2), in particular a measurement resolution, identification data and/or other interface parameters.

6. System of one of the preceding claims, **characterized in that** the configuration unit (1) and/or the control device (3) comprise a memory into which parameter data (21) of the position sensor (2) can be written and be read out therefrom.

7. System of one of the preceding claims, **characterized in that** the control device (3) is a PC, laptop, smartphone or tablet PC.

8. System of one of the preceding claims, **characterized in that** the position sensor (2) is a rotary encoder, a tilt sensor or a linear sensor.

9. Method for configuring and monitoring a position sensor (2) used to determine a position, an angular position and/or velocity of a machine component, comprising the following steps:
- establishing a first data link (12) between the position sensor (2) and a configuration unit (1),
- establishing a second data link (14) between the configuration unit (1) and a control unit (3) by means of a web server (10) integrated in the configuration unit (1),
- reading out or creating parameter data (21) on the control unit (3),
- transmitting the read or created parameter data (21) from the control unit (3) to an online database (4) via a network,
- transmitting the parameter data (21) from the control device (3) to the configuration unit (1) via the second data link (14),
- transmitting the parameter data (21) from the configuration unit (1) to the position sensor (2) via the first data link (12).

10. Method of claim 9, **characterized in that** prior to transmitting the parameter data (21) from the control device (3) to the configuration unit (1), the control unit (3) accesses the web server (10) of the configuration unit (1).

11. Method of one of claims 9 to 10, **characterized in that** prior to transmitting the parameter data (21) from the control unit (3) to the configuration unit (1) the parameter data (21) to be transmitted (21) are stored in the control unit (3) and the parameter data (21) are transmitted automatically at a later time.

## Revendications

1. Système destiné à la configuration et la surveillance d'un capteur de position (2) utilisé pour déterminer une position, une position angulaire, une vitesse de rotation et/ou une vitesse d'un composant de machine, avec au moins le capteur de position (2), une unité de configuration (1) pour configurer et surveiller le capteur de position (2), un dispositif de commande (3) et une base de données (4), l'unité de configuration (1) étant connectée au capteur de position (2) par une première connexion de données (12), l'unité de configuration étant connectée au moins au dispositif de commande (3) par une deuxième connexion de données (14), **caractérisée en ce que** la base de données (4) est configurée comme une base de données en ligne, l'unité de configuration (1) comportant un serveur Web (10), l'unité de configuration (1) comportant, pour la transmission de données sur la deuxième connexion de données (14), une unité de communication compatible avec l'internet et/ou avec la communication mobile, et l'unité de configuration (1) et le dispositif de commande (3) étant configurés pour stocker et récupérer différentes données de paramètres (21) du capteur de position (2) dans/de ladite base de données en ligne (4).

2. Système selon la revendication 1, **caractérisé en ce que** la première connexion de données (12) et/ou la deuxième connexion de données (14) est une connexion sans fil, en particulier une connexion de réseau, Internet, mobile ou autre connexion radio.

3. Système selon l'une des revendications 1 ou 2, **caractérisé en ce que** l'unité de configuration (1) comprend une interface série (11) et/ou une interface de bus pour la transmission de données par la première connexion de données (12).

4. Système selon l'une quelconque des revendications précédentes, **caractérisé en ce que** l'unité de configuration (1) est intégrée dans le capteur de position (2).

5. Système selon l'une quelconque des revendications précédentes, **caractérisé en ce que** l'unité de configuration (1) est apte à définir et/ou lire au/du capteur de position (2) différentes données de paramètre (21) du capteur de position (2), en particulier une résolution de mesure, des données d'identification et/ou d'autres paramètres d'interface.

6. Système selon l'une quelconque des revendications précédentes, **caractérisé en ce que** l'unité de configuration (1) et/ou le dispositif de commande (3) comprend une mémoire dans laquelle des données de paramètre (21) du capteur de position (2) peuvent être écrites et lues.

7. Système selon l'une quelconque des revendications précédentes, **caractérisé en ce que** le dispositif de commande (3) est un PC, un ordinateur portable, un smartphone ou une tablette PC.

8. Système selon l'une quelconque des revendications précédentes, **caractérisé en ce que** le capteur de position (2) est un codeur rotatif, un capteur d'inclinaison ou un capteur linéaire.

9. Procédé de configuration et de surveillance d'un capteur de position (2) utilisé pour déterminer une position, une position angulaire et/ou une vitesse d'un composant de machine, le procédé comprenant les étapes suivantes:
- établissement d'une première connexion de données (12) entre le capteur de position (2) et une unité de configuration (1),
- établissement d'une deuxième connexion de données (14) entre l'unité de configuration (1) et un dispositif de commande (3) par d'un serveur Web (10) intégré dans l'unité de configuration (1),
- lecture ou création de données de paramètre (21) sur le dispositif de commande (3),
- transmission des données de paramètre (21) lues ou crées à partir du dispositif de commande (3) vers une base de données en ligne (4) via un réseau,
- transmission des données de paramètre (21) du dispositif de commande (3) à l'unité de configuration (1) via la deuxième connexion de données (14),
- transmission des données de paramètre (21) de l'unité de configuration (1) au capteur de position (2) via la première connexion de données (12).

10. Procédé selon la revendication 9, **caractérisé en ce qu'**avant la transmission des données de paramètre (21) à partir du dispositif de commande (3) vers l'unité de configuration (1), le dispositif de commande (3) accède au serveur Web (10) de l'unité de configuration (1).

11. Procédé selon l'une des revendications 9 ou 10, **caractérisé en ce qu'**avant la transmission des données de paramètre (21) à partir du dispositif de commande (3) vers l'unité de configuration (1), les données de paramètre (21) à transmettre sont stockées dans le dispositif de commande (3) et les données de paramètre (21) seront automatiquement transmises à un temps ultérieure.
